# EUROPÄISCHE PATENTSCHRIFT

(11) **EP 3 153 464 B1**
(45) Veröffentlichungstag und Bekanntmachung des Hinweises auf die Patenterteilung: **07.08.2019**
(21) Anmeldenummer: 15400043.4
(22) Anmeldetag: 05.10.2015
(51) Int. Cl.: C01B 3/38, F23C 5/08

(54) **DAMPFREFORMER ZUR ERZEUGUNG VON SYNTHESEGAS**
STEAM REFORMER FOR THE PRODUCTION OF SYNTHESIS GAS
RÉFORMEUR À VAPEUR DESTINÉ À LA FABRICATION D'UN GAZ DE SYNTHÈSE

(43) Veröffentlichungstag der Anmeldung: 12.04.2017
(73) Patentinhaber: L'Air Liquide Société Anonyme pour l'Etude et l'Exploitation des Procédés Georges Claude, 75007 Paris (FR)
(72) Erfinder: Coscia, Antonio, D-65589 Hadamar (DE); Hassler, Nathanael, 61267 Neu-Aspach (DE)
(74) Vertreter: Dropsch, Holger

(56) Entgegenhaltungen:
- EP-A1- 1 193 219
- DE-A1-102005 020 943
- FARHADI F ET AL: "Radiative models for the furnace side of a bottom-fired reformer", APPLIED THERMAL ENGINEERING, PERGAMON, OXFORD, GB, Bd. 25, Nr. 14-15, Oktober 2005 (2005-10), Seiten 2398-2411, XP027682174, ISSN: 1359-4311 [gefunden am 2005-10-01]
- "PRIMARY REFORMER PROBLEMS", NITROGEN AND METHANOL, BRITISH SULPHUR PUBLISHING, LONDON, GB, Nr. 250, März 2001 (2001-03), Seiten 30-32,34, XP001008931, ISSN: 1462-2378

## Beschreibung

### Gebiet der Erfindung

Die Erfindung betrifft einen Dampfreformer für die Umwandlung von kohlenwasserstoffreichem Gas mit Dampf in ein kohlenmonoxidreiches und wasserstoffreiches Synthesegas.

Die Erfindung betrifft weiterhin ein Verfahren zur Erzeugung eines kohlenmonoxid- und wasserstoffreiches Synthesegases durch Dampfreformierung eines kohlenwasserstoffreichen Gases.

### Stand der Technik

Dampfreformer zur Umwandlung von gasförmigen Kohlenwasserstoffen mit Dampf in hauptsächlich aus Kohlenmonoxid (CO) und Wasserstoff (H₂) bestehendes Synthesegas sind bekannt. Das Dampfreformierungsverfahren wird grundsätzlich, beispielsweise in Ullmann's Encyclopedia of Industrial Chemistry, Sixth Ed., Vol. 15, Kapitel "Gas Production", Kap. 2.2 beschrieben. Die verschiedenen, für dieses Verfahren bewährten Typen von Rohrreaktoren werden grundsätzlich in Kap. 2.2.3 desselben Bandes beschrieben. In diesem Kapitel sind Rohrreaktoren aufgezeigt, bei denen die Brenner im Dach bzw. im Boden oder in den Seitenwänden des Reformergehäuses installiert sind. Die vorliegende Erfindung betrifft Reformer, bei denen die Brenner im Dach oder im Boden des Gehäuses installiert sind. Innerhalb dieser Kategorie hat sich bisher die Variante mit den im Dach installierten Brennern, wie sie in Figur 6 dieses Ullmann-Kapitels gezeigt werden, weitgehend durchgesetzt. Bei dieser Variante sind alle Zuleitung, d.h. die Leitungen für die Versorgung der Brenner mit Brenngas und die Eduktgasleitungen für die Reformerrohre auf dem Dach und alle Ableitungen, wie die Leitung für die Abfuhr der Brennerabgase und des Produktgases aus den Reformerrohren am Boden des Reformergehäuses angeordnet. Besonders günstig ist es, die Produktgase am Boden des Gehäuses abzuführen, da ihre Temperatur im Bereich von 900°C liegt und sie nach Verlassen des Reformers zur Wärmerückgewinnung durch einen Abhitzekessel geleitet werden. Da ein Abhitzekessel so schwer ist, dass eine Aufstellung nur in Bodenhöhe in Frage kommt, führt ein Abzug der Produktgase am Boden des Reformergehäuses zu einem kurzen Leitungsweg zum Abhitzekessel und damit auch zu geringen Wärmeverlusten in der Leitung.

Andererseits ist die Verlegung der Eduktgasleitungen und der Brenngasleitungen auf dem Dach des Reformergehäuses aus mehreren Gründen ungünstig. Diese Leitungen beeinträchtigen die Zugänglichkeit der Reformerrohre, die nur über Dach ausgetauscht werden können. Außerdem muss das Dach zur Wartung der Brenner und zur Überprüfung der Leitungen für Personal zugänglich und gefahrlos begehbar sein.

Besonders ungünstig ist die Anordnung der Eduktgasleitungen auf dem Dach des Reformergehäuses bei Reformerrohren mit integriertem Wärmetausch zwischen den Eduktgasen und den Produktgasen. Solche Reformerrohre werden beispielsweise in der Offenlegungsschrift DE 102011118217 A1 beschrieben. Da bei diesen Reformerrohren der Produktgasaustritt auf derselben Seite angeordnet ist wie der Eduktgaseintritt, müssten folglich auch die Produktgasleitungen auf dem Dach des Reformergehäuses angeordnet werden, wodurch die Zuleitung der Produktgase zum Abhitzekessel bzw. die Anordnung des Abhitzekessels erschwert wird.

Weitere Anordnungen sind aus EP 1 193 219 A1 und aus FARHADI F. et al., Radiative models for the furnace side of a bottom-fired reformer, Applied Thermal Engineering, 25 (2005) 2398-2411, bekannt.

### Beschreibung der Erfindung

Aufgabe der vorliegenden Erfindung ist es daher, einen Dampfreformer zur Verfügung zu stellen, bei dem die Nachteile des Stands der Technik vermieden werden. Die Aufgabe wird gelöst durch einen Dampfreformer gemäß den Merkmalen des unabhängigen Anspruchs 1 und, in alternativer Ausgestaltung der Erfindung, des unabhängigen Anspruchs 2.

### Erfindungsgemäßer Dampfreformer:

Dampfreformer, umfassend:
- einen Feuerraum, mit einem Boden, einer Decke und den Feuerraum abschließenden Seitenwänden,
- in mehreren Reihen angeordnete Katalysatorrohre mit integrierter Rückführung des Produktgases, die den Boden des Feuerraums durchstoßen, wobei die Katalysatorrohre so angeordnet sind, dass sich die Rohranschlüsse für die Eduktgasleitungen und Produktgasleitungen an dem aus dem Feuerraum nach unten herausragenden Ende der Katalysatorrohre befinden,
- unterhalb des Bodens des Feuerraums verlaufende Zuleitungen für das Eduktgas und Sammelleitungen für das Produktgas,
- im Boden des Feuerraums installierte, vertikal nach oben in den Feuerraum gerichtete Brenner zur Beheizung der Katalysatorrohre,
- unterhalb des Bodens des Feuerraums verlaufende Zuleitungen jeweils für die Zufuhr der Luft und des Brenngases zur den Brennern,
- in der Decke des Feuerraums installierte Öffnungen für die Ableitung des Brennerabgases,
- oberhalb der Decke des Feuerraums verlaufende Kanäle für die Ableitung des Brennerabgases.

### Erfindungsgemäßer Dampfreformer in alternativer Ausgestaltung:

Dampfreformer, umfassend:
- einen Feuerraum, mit einem Boden, einer Decke und den Feuerraum abschließenden Seitenwänden,
- in mehreren Reihen angeordnete Katalysatorrohre, die den Boden und die Decke des Feuerraums durchstoßen, wobei die Katalysatorrohre so angeordnet sind, dass sich die Rohranschlüsse für die Eduktgasleitungen an dem aus dem Feuerraum nach unten herausragenden Ende der Katalysatorrohre befinden und sich die Rohranschlüsse für die Produktgasleitungen an dem aus dem Feuerraum nach oben herausragenden Ende der Katalysatorrohre befinden,
- unterhalb des Bodens des Feuerraums verlaufende Zuleitungen für das Eduktgas,
- oberhalb der Decke des Feuerraums verlaufende Sammelleitungen für das Produktgas,
- im Boden des Feuerraums installierte, vertikal nach oben in den Feuerraum gerichtete Brenner zur Beheizung der Katalysatorrohre,
- unterhalb des Bodens des Feuerraums verlaufende Zuleitungen jeweils für die Zufuhr der Luft und des Brenngases zur den Brennern,
- in der Decke des Feuerraums installierte Öffnungen für die Ableitung des Brennerabgases,
- oberhalb der Decke des Feuerraums verlaufende Kanäle für die Ableitung des Brennerabgases.

Bei einem Reformer gemäß Anspruch 1 besteht eines der Merkmale darin, dass Katalysatorrohren mit integrierter Rückführung des Produktgases eingesetzt werden, wie sie in der deutschen Offenlegungsschrift DE 102011118217 A1 beschrieben sind. Bei dieser Technik liegen die Zugänge für die Edukt- und für die Produktgase am gleichen Ende des Katalysatorrohrs. Dadurch können die Sammelleitungen für diese Gase komplett unter dem Boden des Reformergehäuses verlegt werden.

Dagegen besteht bei einem Reformer gemäß dem zweiten unabhängigen Anspruch 2 eines der Merkmale darin, dass Katalysatorrohre ohne integrierte Rückführung des Produktgases eingesetzt werden. Die Katalysatorrohre ragen aus dem Boden und der Decke des Reformergehäuses heraus, die Eduktgase werden am Boden in die Katalysatorrohre eingeführt und die Produktgase werden über dem Dach des Gehäuses aus den Katalysatorrohren gesammelt und abgeführt.

Bei den erfindungsgemäßen Reformern besteht ein Vorteil darin, dass der Abzug der Brennerabgase oben am Reformerdach, also in Konvektionsrichtung der Abgase, erfolgt. Auf diese Weise kann Verdirchter- bzw. Gebläseleistung eingespart werden, da sich die Brennerabgase einfacher absaugen lassen.

Ferner wird durch die erfindungsgemäße Anordnung der Zuleitungen und Ableitungen für Edukte, Produkte, Verbrennungsluft und Brenngasen am bzw. unterhalb des Reformerbodens eine sehr symmetrische und kompakte Bauform des Feuerraums ermöglicht, wodurch Wärmeverluste und der Brennstoffbedarf verringert werden.

Günstig ist zudem die gegenüber herkömmlichen Reformern bessere Zugänglichkeit der Reformerrohre über das Dach, so dass sie im Servicefall einfacher nach oben hin demontiert und ausgetauscht werden können. Dasselbe gilt für einen gegebenenfalls erforderlichen Wechsel des Katalysators in den Rohren, wobei der desaktivierte Katalysator günstig von oben her z. B. durch Absaugen entfernt, und der neue Katalysator ebenfalls von oben her durch Schütten in die Reformerrohre eingebracht werden kann.

Durch die erfindungsgemäße sehr kurze Anbindung der Produktleitungen an nachgeschaltete Apparate, z. B. Abhitzekessel, wird außer der Verringerung von Wärmeverlusten auch das Risiko der Metal-Dusting-Korrosion verringert.

Die erfindungsgemäße Anordnung der Brenner auf dem Boden des Feuerraumes sorgt für deren leichte Zugänglichkeit im Servicefall. Ferner nimmt die Bodenplatte die Last des Brenner-Brenngas-Luftzufuhrsystems auf, so dass das Reformerdach entsprechend entlastet wird.

Der Zugang zu den am oder unter dem Boden des Feuerraumes angeordneten Anlagenteilen wird durch die Anordnung einer begehbaren Zwischenebene zwischen dem Boden des Feuerraumes und dem Aufstellboden sichergestellt.

Zur Erfindung gehört weiterhin ein Verfahren zur katalytischen Umwandlung von kohlenwasserstoffhaltigem Gas mit Dampf in ein Wasserstoff und Kohlenoxide enthaltendes Synthesegas, umfassend die folgenden Verfahrensschritte:
a) Bereitstellen eines kohlenwasserstoffhaltigen Gases und von Dampf,
b) Erzeugen eines Eduktgases durch Vermischen des Gases und des Dampfs,
c) Umwandeln des Eduktgases in ein Wasserstoff und Kohlenoxide umfassendes Synthesegas durch Umsetzen in einem Dampfreformer gemäß der Ansprüche 1 bis 5 unter Reformierungsbedingungen,
d) Ausleiten des Synthesegases zur weiteren Behandlung außerhalb des Verfahrens.

Unter Reformierungsbedingungen werden dabei die dem Fachmann an sich geläufigen Betriebsbedingungen der Reformeranlage verstanden, die einen technisch und ökonomisch sinnvollen Umsetzungsgrad der Einsatzstoffe zu Synthesegaskomponenten gewährleisten.

### Bevorzugte Ausgestaltungen der Erfindung

Eine bevorzugte Ausgestaltung der Erfindung besteht darin, dass die integrierte Rückführung des Produktgases in den Katalysatorrohren durch einen jeweils in den Rohren integrierten Wärmetauscher erfolgt, über den ein Wärmeaustausch zwischen dem im Katalysatorrohr strömenden Edukt- und dem Produktgas erfolgt. Diese Technik ist ebenfalls in der deutschen Offenlegungsschrift DE 102011118217 A1 beschrieben. Auf diese Weise wird Wärme vom heißen Produktgas auf das Eduktgas übertragen, wodurch Heizenergie eingespart wird und die Erwärmung und damit die Umsetzung der Eduktgase beschleunigt wird.

Eine weitere bevorzugte Ausgestaltung der Erfindung besteht darin, dass die Katalysatorrohre an ihrem oberen Ende mit verschließbaren Öffnungen zum Austauschen des Katalysators ausgestattet sind. Durch diese Öffnungen kann verbrauchter Katalysator, z. B. durch Absaugen, aus den Rohren entfernt und neuer Katalysator eingefüllt werden.

Eine weitere bevorzugte Ausgestaltung der Erfindung besteht darin, dass die Decke des Feuerraums Öffnungen aufweist, durch die demontierte Katalysatorrohre nach oben hin aus dem Feuerraum entfernt werden können. Da erfindungsgemäß die Brenner im Reformerboden installiert sind, wird auf dem Reformerdach Platz gewonnen, wodurch der Austauschen von Katalysatorrohren über das Dach erleichtert wird.

### Ausführungsbeispiele

Weitere Merkmale, Vorteile und Anwendungsmöglichkeiten der Erfindung ergeben sich auch aus der nachfolgenden Beschreibung von Ausführungsbeispielen und den Zeichnungen. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

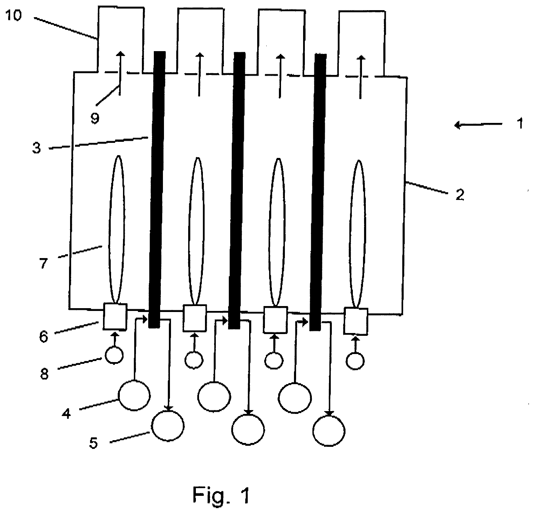

Anhand der Zeichnung Fig. 1 soll eine der möglichen Ausführungsformen eines erfindungsgemäßen Dampfreformers erläutert werden. Es zeigt die einzige Figur
- Fig. 1: eine Schnittzeichnung eines beispielhaften Dampfreformers nach einer ersten Ausgestaltung der Erfindung, von der Stirnseite aus gesehen,
- Fig. 2: eine Schnittzeichnung eines beispielhaften Dampfreformers nach zweiten Ausgestaltung der Erfindung, von der Stirnseite aus gesehen.

Der in Fig. 1 dargestellte Dampfreformer 1 entspricht einer Ausgestaltung der Erfindung gemäß Anspruch 1 und umfasst das Reformergehäuse 2. Das Innere des Reformergehäuses 2 wird oft auch als Feuerraum bezeichnet. In diesem Beispiel ist der Reformer 1 zur Veranschaulichung mit drei Reihen Katalysatorrohren 3 ausgestattet. Die Rohre 3 durchstoßen die Decke des Reformergehäuses 2. Dadurch sind sie für Wartungsarbeiten gut zugänglich. Die Rohre sind mit einer internen Rückführung des Produktgases ausgestattet, so dass sowohl die Versorgung mit Eduktgas als auch die Abfuhr des Produktgases von der gleichen Seite des Rohres am bzw. unter dem Boden des Feuerraums erfolgt. Die Sammelleitungen für das Eduktgas 4 und für das Produktgas 5 verlaufen unter dem Reformerboden parallel zu den Katalysatorrohrreihen. Im Reformerboden sind die Brenner 6 in vier Reihen, links und rechts, sowie zwischen den Katalysatorrohrreihen angeordnet. Die Brenner 6 sind so ausgerichtet, dass ihre Flammen 7 senkrecht nach oben in das Reformergehäuse 2 hinein gerichtet sind. Die Sammelleitungen für das Brenngas 8 und die Verbrennungsluft (nicht bildlich dargestellt) verlaufen auch unter dem Boden des Reformergehäuses 2, parallel zu den Brennerreihen. Das Abgas 9 der Brenner tritt durch Öffnungen in der Decke des Reformergehäuses 2 in die Abgaskanäle 10 über. Vier Abgaskanäle 10 sind auf dem Gehäuse parallel zu den Katalysatorrohrreihen angeordnet.

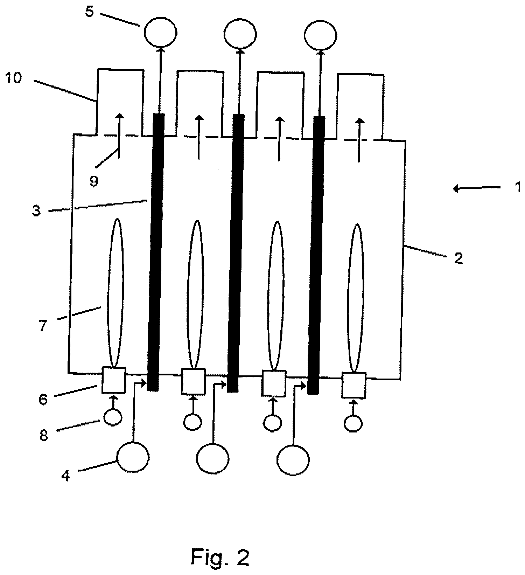

Der in Fig. 2 dargestellte Dampfreformer 1 entspricht einer Ausgestaltung der Erfindung gemäß Anspruch 2. Hier befinden sich die Sammelleitungen für das Produktgas 5 oberhalb der Decke des Reformergehäuses 2.

### Gewerbliche Anwendbarkeit

Die Erfindung stellt einen Dampfreformer zur Verfügung, der leichter bedient und gewartet werden kann und bezüglich des Energiebedarfs und der Aufstellmöglichkeiten Vorteile bietet. Die Erfindung liefert damit einen wirtschaftlichen Vorteil gegenüber den aus dem Stand der Technik bekannten Reformern und ist daher gewerblich vorteilhaft anwendbar.

### Bezugszeichenllste

- 1: Dampfreformer
- 2: Reformergehäuse
- 3: Katalysatorrohre
- 4: Sammelleitung Eduktgas
- 5: Sammelleitung Produktgas
- 6: Brenner
- 7: Brennerflamme
- 8: Sammelleitung Brenngas
- 9: Brennerabgas
- 10: Abgaskanal

## Patentansprüche

1. Dampfreformer (1), umfassend:
- einen Feuerraum, mit einem Boden, einer Decke und den Feuerraum abschließenden Seitenwänden,
- in mehreren Reihen angeordnete Katalysatorrohre (3) mit integrierter Rückführung des Produktgases, die den Boden des Feuerraums durchstoßen, wobei die Katalysatorrohre (3) so angeordnet sind, dass sich die Rohranschlüsse für die Eduktgasleitungen (4) und Produktgasleitungen (5) an dem aus dem Feuerraum nach unten herausragenden Ende der Katalysatorrohre (3) befinden,
- unterhalb des Bodens des Feuerraums verlaufende Zuleitungen für das Eduktgas und Sammelleitungen (5) für das Produktgas,
- im Boden des Feuerraums installierte, vertikal nach oben in den Feuerraum gerichtete Brenner (6) zur Beheizung der Katalysatorrohre (3),
- unterhalb des Bodens des Feuerraums verlaufende Zuleitungen jeweils für die Zufuhr der Luft und des Brenngases zur den Brennern (6),
- in der Decke des Feuerraums installierte Öffnungen für die Ableitung des Brennerabgases (9),
- oberhalb der Decke des Feuerraums verlaufende Kanäle (10) für die Ableitung des Brennerabgases (9).

2. Dampfreformer (1), umfassend:
- einen Feuerraum, mit einem Boden, einer Decke und den Feuerraum abschließenden Seitenwänden,
- in mehreren Reihen angeordnete Katalysatorrohre (3), die den Boden und die Decke des Feuerraums durchstoßen, wobei die Katalysatorrohre (3) so angeordnet sind, dass sich die Rohranschlüsse für die Eduktgasleitungen (4) an dem aus dem Feuerraum nach unten herausragenden Ende der Katalysatorrohre (3) befinden und sich die Rohranschlüsse für die Produktgasleitungen (5) an dem aus dem Feuerraum nach oben herausragenden Ende der Katalysatorrohre (3) befinden,
- unterhalb des Bodens des Feuerraums verlaufende Zuleitungen (4) für das Eduktgas,
- oberhalb der Decke des Feuerraums verlaufende Sammelleitungen (5) für das Produktgas,
- im Boden des Feuerraums installierte, vertikal nach oben in den Feuerraum gerichtete Brenner (6) zur Beheizung der Katalysatorrohre (3),
- unterhalb des Bodens des Feuerraums verlaufende Zuleitungen jeweils für die Zufuhr der Luft und des Brenngases (8) zur den Brennern (6),
- in der Decke des Feuerraums installierte Öffnungen für die Ableitung des Brennerabgases (9),
- oberhalb der Decke des Feuerraums verlaufende Kanäle (10) für die Ableitung des Brennerabgases (9).

3. Dampfreformer (1) gemäß Anspruch 1, **dadurch gekennzeichnet, dass** die integrierte Rückführung des Produktgases in den Katalysatorrohren (3) durch einen jeweils in den Rohren integrierten Wärmetauscher erfolgt, über den ein Wärmeaustausch zwischen dem im Katalysatorrohr (3) strömenden Edukt- und dem Produktgas erfolgt.

4. Dampfreformer (1) gemäß Anspruch 1 oder 3, **dadurch gekennzeichnet, dass** die Katalysatorrohre (3) an ihrem oberen Ende mit verschließbaren Öffnungen zum Austauschen des Katalysators ausgestattet sind.

5. Dampfreformer (1) gemäß Anspruch 1, 3 oder 4, **dadurch gekennzeichnet, dass** die Decke des Feuerraums Öffnungen aufweist, durch die demontierte Katalysatorrohre (3) nach oben hin aus dem Feuerraum entfernt werden können.

6. Verfahren zur katalytischen Umwandlung von kohlenwasserstoffhaltigem Gas mit Dampf in ein Wasserstoff und Kohlenoxide enthaltendes Synthesegas, umfassend die folgenden Verfahrensschritte:
e) Bereitstellen eines kohlenwasserstoffhaltigen Gases und von Dampf,
f) Erzeugen eines Eduktgases durch Vermischen des Gases und des Dampfs,
g) Umwandeln des Eduktgases in ein Wasserstoff und Kohlenoxide umfassendes Synthesegas durch Umsetzen in einem Dampfreformer gemäß der Ansprüche 1 bis 5 unter Reformierungsbedingungen,
h) Ausleiten des Synthesegases zur weiteren Behandlung außerhalb des Verfahrens.

## Claims

1. A steam reformer (1), comprising:
- a combustion chamber with a bottom, a ceiling and side walls terminating the combustion chamber,
- catalyst tubes (3) arranged in several rows with integrated recirculation of the product gas, which penetrate through the bottom of the combustion chamber, wherein the catalyst tubes (3) are arranged such that the tube ports for the educt gas conduits (4) and product gas conduits (5) are located at the end of the catalyst tubes (3) protruding downwards out of the combustion chamber,
- feed conduits for the educt gas and collecting conduits (5) for the product gas, which extend below the bottom of the combustion chamber,
- burners (6) for heating the catalyst tubes, which are installed in the bottom of the combustion chamber and are directed vertically upwards into the combustion chamber,
- feed conduits extending below the bottom of the combustion chamber, each for supplying the air and the fuel gas to the burners (6),
- openings installed in the ceiling of the combustion chamber for discharging the burner waste gas (9),
- channels (10) extending above the ceiling of the combustion chamber for discharging the burner waste gas (9).

2. A steam reformer (1), comprising:
- a combustion chamber with a bottom, a ceiling and side walls terminating the combustion chamber,
- catalyst tubes (3) arranged in several rows, which penetrate the bottom and the ceiling of the combustion chamber, wherein the catalyst tubes (3) are arranged such that the tube ports for the educt gas conduits (4) are located at the end of the catalyst tubes (3) protruding downwards out of the combustion chamber, and the tube ports for the product gas conduits (5) are located at the end of the catalyst tubes (3) protruding upwards out of the combustion chamber,
- feed conduits (4) for the educt gas, which extend below the bottom of the combustion chamber,
- collecting conduits (5) for the product gas, which extend above the ceiling of the combustion chamber,
- burners (6) for heating the catalyst tubes (3), which are installed in the bottom of the combustion chamber and are directed vertically upwards into the combustion chamber,
- feed conduits extending below the bottom of the combustion chamber, each for supplying the air and the fuel gas (8) to the burners (6),
- openings installed in the ceiling of the combustion chamber for discharging the burner waste gas (9),
- channels (10) extending above the ceiling of the combustion chamber for discharging the burner waste gas (9).

3. The steam reformer (1) according to claim 1, **characterized in that** the integrated recirculation of the product gas in the catalyst tubes (3) is effected by a heat exchanger each integrated into the tubes, via which a heat exchange between the educt gas and the product gas flowing in the catalyst tube (3) is effected.

4. The steam reformer (1) according to claim 1 or 3, **characterized in that** at their upper end the catalyst tubes (3) are equipped with closable openings for exchanging the catalyst.

5. The steam reformer (1) according to claim 1, 3 or 4, **characterized in that** the ceiling of the combustion chamber includes openings through which demounted catalyst tubes (3) can be removed from the combustion chamber towards the top.

6. A process for the catalytic conversion of hydrocarbonaceous gas with steam into a synthesis gas containing hydrogen and carbon oxides, comprising the following process steps:
a) providing a hydrocarbonaceous gas and steam,
b) producing an educt gas by mixing the gas and the steam,
c) converting the educt gas into a synthesis gas comprising hydrogen and carbon oxides by conversion in a steam reformer according to claims 1 to 5 under reforming conditions,
d) discharging the synthesis gas for the further treatment outside the process.

## Revendications

1. Reformeur à vapeur (1), comprenant :
- une chambre de combustion avec un fond, un plafond et des parois latérales complétant la chambre de combustion,
- des tubes de catalyseur (3) agencés en plusieurs rangées avec recirculation intégrée du gaz produit, qui pénètrent à travers le fond de la chambre de combustion, les tubes de catalyseur (3) étant agencés de telle sorte que les orifices de tube pour les conduites de gaz réactif (4) et les conduites de gaz produit (5) sont situés à l'extrémité des tubes de catalyseur (3) faisant saillie vers le bas hors de la chambre de combustion,
- des conduites d'alimentation pour le gaz réactif et des conduites de collecte (5) pour le gaz produit, qui s'étendent au-dessous du fond de la chambre de combustion,
- des brûleurs (6) pour chauffer les tubes de catalyseur, qui sont installés dans le fond de la chambre de combustion et sont dirigés verticalement vers le haut à l'intérieur de la chambre de combustion,
- des conduites d'alimentation s'étendant au-dessous du fond de la chambre de combustion, chacune pour fournir l'air et le gaz combustible aux brûleurs (6),
- des ouvertures installées dans le plafond de la chambre de combustion pour évacuer les fumées de brûleur (9),
- des canaux (10) s'étendant au-dessus du plafond de la chambre de combustion pour évacuer les fumées de brûleur (9).

2. Reformeur à vapeur (1), comprenant :
- une chambre de combustion avec un fond, un plafond et des parois latérales complétant la chambre de combustion,
- des tubes de catalyseur (3) agencés en plusieurs rangées, qui pénètrent à travers le fond et le plafond de la chambre de combustion, les tubes de catalyseur (3) étant agencés de telle sorte que les orifices de tube pour les conduites de gaz réactif (4) sont situés à l'extrémité des tubes de catalyseur (3) faisant saillie vers le bas hors de la chambre de combustion, et les orifices de tube pour les conduites de gaz produit (5) sont situés à l'extrémité des tubes de catalyseur (3) faisant saillie vers le haut hors de la chambre de combustion,
- des conduites d'alimentation (4) pour le gaz réactif, qui s'étendent au-dessous du fond de la chambre de combustion,
- des conduites de collecte (5) pour le gaz produit, qui s'étendent au-dessus du plafond de la chambre de combustion,
- des brûleurs (6) pour chauffer les tubes de catalyseur (3), qui sont installés dans le fond de la chambre de combustion et sont dirigés verticalement vers le haut à l'intérieur de la chambre de combustion,
- des conduites d'alimentation s'étendant au-dessous du fond de la chambre de combustion, chacune pour fournir l'air et le gaz combustible (8) aux brûleurs (6),
- des ouvertures installées dans le plafond de la chambre de combustion pour évacuer les fumées de brûleur (9),
- des canaux (10) s'étendant au-dessus du plafond de la chambre de combustion pour évacuer les fumées de brûleur (9).

3. Reformeur à vapeur (1) selon la revendication 1, **caractérisé en ce que** la recirculation intégrée du gaz produit dans les tubes de catalyseur (3) est effectuée par un échangeur de chaleur intégré dans chacun des tubes, par le biais duquel un échange de chaleur entre le gaz réactif et le gaz produit circulant dans le tube de catalyseur (3) est effectué.

4. Reformeur à vapeur (1) selon la revendication 1 ou 3, **caractérisé en ce que**, à leur extrémité supérieure, les tubes de catalyseur (3) sont équipés d'ouvertures fermables pour changer le catalyseur.

5. Reformeur à vapeur (1) selon la revendication 1, 3 ou 4, **caractérisé en ce que** le plafond de la chambre de combustion comporte des ouvertures par lesquelles des tubes de catalyseur (3) démontés peuvent être retirés de la chambre de combustion vers le haut.

6. Procédé de conversion catalytique de gaz hydrocarboné avec de la vapeur d'eau en gaz de synthèse contenant de l'hydrogène et des oxydes de carbone, comprenant les étapes de procédé suivantes :
a) se procurer un gaz hydrocarboné et de la vapeur d'eau,
b) produire un gaz réactif en mélangeant le gaz et la vapeur d'eau,
c) convertir le gaz réactif en gaz de synthèse comprenant de l'hydrogène et des oxydes de carbone par conversion dans un reformeur à vapeur selon les revendications 1 à 5 dans des conditions de reformage,
d) évacuer le gaz de synthèse pour le traitement supplémentaire à l'extérieur du procédé.
